# EUROPÄISCHE PATENTSCHRIFT

(11) **EP 4 201 831 B1**
(45) Veröffentlichungstag und Bekanntmachung des Hinweises auf die Patenterteilung: **19.03.2025**
(21) Anmeldenummer: 22214894.2
(22) Anmeldetag: 20.12.2022
(51) Int. Cl.: B65D 5/44, F16B 2/12, F16B 19/02, F16B 21/07, F16B 21/09

(54) **SPANNEINHEIT UND VORRATSEINHEIT MIT WENIGSTENS EINER SPANNEINHEIT**
CLAMPING UNIT AND STORAGE UNIT WITH AT LEAST ONE CLAMPING UNIT
UNITÉ DE SERRAGE ET UNITÉ DE STOCKAGE DOTÉE D'AU MOINS UNE UNITÉ DE SERRAGE

(30) Priorität: 20.12.2021 DE 102021133931; 28.03.2022 DE 102022107208
(43) Veröffentlichungstag der Anmeldung: 28.06.2023
(73) Patentinhaber: InnoDo AG, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- DE-U1- 202005 019 632
- FR-A1- 2 673 250
- GB-A- 2 541 495
- US-A- 3 938 587
- US-A1- 2014 072 386
- US-A1- 2017 045 073

## Beschreibung

Die vorliegende Erfindung betrifft eine Spanneinheit zum Verspannen von einer ersten und einer gegenüberliegenden zweiten Seitenwand einer Vorratseinheit, insbesondere eines Kartons, in einem Spannzustand. Ferner betrifft die vorliegende Erfindung eine Vorratseinheit zur Aufnahme von Schüttgut mit wenigstens einer erfindungsgemäßen Spanneinheit.

Aus dem Gebrauchsmuster DE 20 2006 015 624 U1 der Anmelderin ist bereits eine Vorratseinheit, die eine Spanneinheit umfasst, für den Transport und die Lagerung von Schüttgut bekannt. Zwischen insgesamt vier, paarweise gegenüberliegenden Seitenwänden bildet die bekannte Vorratseinheit einen Raum zur Aufnahme des Schüttguts aus. Jeweils zwei gegenüberliegende Seitenwände werden durch eine Spanneinheit so miteinander verspannt, dass die auf die Seitenwände einwirkende Gewichtskraft reduziert wird. Durch die verringerte Kraftbeaufschlagung, die auf die Seitenwände einwirkt, können die Seitenwände dünner ausgebildet werden, weshalb zum einen die Herstellungskosten der Vorratseinheit aufgrund der Materialeinsparung als auch die Transportkosten des Schüttguts mittels der Vorratseinheit aufgrund des größeren Schüttgut-Volumens reduziert werden können.

Die Spanneinheit, die zur Vorratseinheit als separates Bauteil ausgebildet ist, umfasst einen Spannstrang, der sich zwischen einem ersten Spannanker und einem freien Ende erstreckt. Der Spannstrang umfasst einen Arretierbereich mit einer Vielzahl von benachbarten Raststufen. Ferner umfasst der bekannte Spannstrang einen zweiten Spannanker, der durch ein separates Bauteil ausgebildet ist und Arretiermittel umfasst, die zum lösbaren Festlegen in einer der Raststufen ausgebildet sind. In einem Spannzustand können somit zwei gegenüberliegende Seitenwände durch den Spannstrang verspannt werden, wobei von beiden Spannankern eine Krafteintragsfläche ausgebildet wird, die jeweils außenseitig an einer der Seitenwände der Vorratseinheit anliegen.

Um die Arretiermittel in eine der Raststufen einzuführen, umfasst der zweite Spannanker eine schlitzartige Aussparung zum Ausbilden einer Führung zum Festlegen des Spannankers, die in den Arretiermitteln mündet. Durch den Einsatz der bekannten Spanneinheit lassen sich mehrere Vorratseinheiten, die eine rechteckförmige Grundfläche und dünne Seitenwände aufweisen, platzsparend in einem Laderaum, insbesondere auch gestapelt, anordnen, was den effizienten Transport des Schüttguts ermöglicht.

Aus der DE 10 2020 116 A1 ist eine Spanneinheit samt Spannstrang der Anmelderin bekannt, bei der der Spannstrang mehrere Arretierungsabschnitte aufweist und somit eine Anpassung an Transport- und Lagereinheiten mit unterschiedlichen Abmessungen erlaubt.

Aus der EP 2 865 902 A1 ist zudem eine Verbindungsvorrichtung für eine Bausystem und ein Bausystem für Möbel bekannt, bei dem eine Zugstange beidseitig befestigt oder verschraubt wird, um Bauteile gegeneinander zu drücken.

Aus der US 3 938 587 A ist eine Spannungsbefestigung für die Installation eines Ölkühlers in einem Motorsystem bekannt, wobei das Spannsystem dabei aus zwei Spannankern und einem Spannstrang besteht, welcher entlang dem Großteil seiner Länge einen zahnartig ausgebildeten Arretierbereich zeigt. Einer der Spannanker umfasst eine Eintrittsöffnung mit Arretiermechanismus, wodurch dieser Spannanker auf der gewünschten Position entlang des Spannstrangs festgesetzt werden kann.

In der US 2014/0072386 A1 und US 2017/0045073 A1 werden ebenfalls Spannbefestigungen beschrieben, mit zwei Spannankern, wobei ein Spannanker zuerst eigenständig angeordnet ist und der zweite Spannanker an einem Spannstrang ansitzt. Auf dem Spannstrang ist ein langer Arretierbereich ausgebildet, innerhalb dessen der bewegliche Spannanker durch einen Arretiermechanismus in seiner Eintrittsöffnung positioniert werden kann.

In der GB 2 541 495 A wird eine Spannbefestigung beschrieben, die einerseits einen Klippmechanismus zeigt, an welchem der Spannstrang angeordnet ist, und andererseits einen beweglichen scheibenförmigen Spannanker. Der Spannstrang zeigt auch hier einen Arretierbereich über den Großteil der Länge des Spannstrangs auf welchem der bewegliche Spannanker durch einen Arretiermechanismus festgesetzt werden kann.

Allerdings kann einer der außenseitig anliegenden zweiten Spannanker, die lösbar zum Spannstrang ausgebildet sind, während des Ein- oder Ausladens beispielsweise durch eine Seitenkante einer benachbarten Vorratseinheit oder dem Spannanker der benachbarten Vorratseinheit im Bereich des Schlitzes oder der schlitzartigen Aussparung kraftbeaufschlagt werden. Wirkt diese Kraft auf den zweiten Spannanker in Richtung der Führung, kann dies im ungünstigsten Fall das Lösen des zweiten Spannankers aus der Raststufe zur Folge haben, was dann aufgrund der auf die Seitenwände einwirkenden Gewichtskraft des Schüttguts unmittelbar zur Kollision der Vorratseinheit führt. Dies führt zu aufwendigen Aufräumarbeiten und verursacht einen erheblichen Zeitverlust.

Daher liegt der vorliegenden Erfindung die Aufgabe zugrunde, die aus dem Stand der Technik bekannten Nachteile zu überwinden. Insbesondere ist es Aufgabe der vorliegenden Erfindung, eine Spanneinheit und eine Vorratseinheit anzugeben, bei denen es auch bei einem unmittelbar benachbarten Anordnen mehrerer Vorratseinheiten nur noch deutlich seltener oder sehr viel unwahrscheinlicher zu einem versehentlichen Lösen der zweiten Ankereinheit vom Spannstrang kommen kann.

Die Aufgabe wird durch die Spanneinheit mit den Merkmalen des Anspruchs 1 gelöst. Ferner wird die Aufgabe durch eine Vorratseinheit mit wenigstens einer erfindungsgemäßen Spanneinheit gelöst.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Im Rahmen der vorliegenden Erfindung ist eine Spanneinheit zum Verspannen von gegenüberliegenden Seitenwänden, insbesondere einer ersten und einer gegenüberliegenden zweiten Seitenwand, einer Vorratseinheit, insbesondere eines Kartons, in einem Spannzustand vorgesehen.

Die erfindungsgemäße Spanneinheit umfasst einen Spannstrang, der einen ersten Spannanker umfasst, sich von dem ersten Spannanker entlang einer Längsrichtung zu einem freien Ende hin erstreckt und zwischen dem ersten Spannanker und dem freien Ende wenigstens einen Arretierbereich mit einer Vielzahl von in Längsrichtung zueinander benachbart angeordneten Arretierstufen umfasst, wobei der erste Spannanker im Spannzustand zum außenseitigen Abstützen einer der Seitenwände, insbesondere der ersten Seitenwand, eine erste Krafteintragsfläche für die erste Seitenwand ausbildet.

Weiterhin umfasst die erfindungsgemäße Spanneinheit einen mit dem Spannstrang verbindbaren zweiten Spannanker zum Abstützen einer der anderen Seitenwände, insbesondere der gegenüberliegenden zweiten Seitenwand, durch das Ausbilden einer weiteren Krafteintragsfläche, wobei der zweite Spannanker Arretiermittel umfasst, die zum Zusammenwirken mit dem Arretierbereich so ausgebildet sind, dass der zweite Spannanker in einer der Arretierstufen festlegbar ist.

Erfindungsgemäß ist nun vorgesehen, dass der zweite Spannanker einen äußeren Abschnitt mit einer in Umfangsrichtung vollständig geschlossenen Außenkontur und einen inneren Abschnitt mit einer Eintrittsöffnung zum Durchführen und/oder Einführen des freien Endes des Spannstrangs und zum Führen und/oder Positionieren des vom Spannstrang ausgebildeten Arretierbereichs im Spannzustand umfasst.

Der zweite Spannanker ist zum Spannstrang und insbesondere auch zum ersten Spannanker als separates Bauteil ausgebildet. Der zweite Spannanker lässt sich zum Realisieren des Spannzustands mit dem Spannstrang verbinden. Hierfür umfasst der zweite Spannanker die Arretiermittel, die so ausgebildet sind, dass sich der zweite Spannanker in einer der Arretierstufen festlegen lässt.

Die Arretierstufen, die vom Spannstrang umfasst sind, sind bezüglich der Längserstreckung des Spannstrangs zueinander benachbart im Arretierbereich ausgebildet. Vorteilhaft kann somit die Strecke, die sich zwischen dem ersten Spannanker und dem zweiten Spannanker erstreckt, stufenförmig angepasst werden, weshalb sich die erfindungsgemäße Spanneinheit an unterschiedlich breite und/oder lange Vorratseinheiten anpassen lässt. Vorteilhaft kann somit erzielt werden, dass die erste Krafteintragsfläche, die vom ersten Spannanker ausgebildet wird, und die weitere Krafteintragsfläche, die vom zweiten Spannanker ausgebildet wird, optimal, bevorzugt gleichmäßig, anliegen.

Unter dem äußeren Abschnitt wird ein Bereich des zweiten Spannankers verstanden, der die Außenkontur des zweiten Spannankers ausbildet. Die Außenkontur stellt ein Rahmenelement oder ein Gehäuseelement dar, das insbesondere in Bezug auf eine Umfangsrichtung vollständig geschlossen ist. Die Umfangsrichtung verläuft im Spannzustand um den Spannstrang, der sich entlang der Längsrichtung erstreckt. Der äußere Abschnitt ist bei einer bevorzugten platten- oder donut- oder tellerförmigen Ausgestaltung des zweiten Spannankers außenseitig oder radial außen um den inneren Abschnitt angeordnet und umschließt diesen in Umfangsrichtung vollständig. Anders ausgedrückt, der äußere Abschnitt bildet für den inneren Abschnitt eine Außenkontur aus, die den inneren Abschnitt vollständig umschließt, bevorzugt umrahmt.

Der innere Abschnitt wird vom äußeren Abschnitt in Umfangsrichtung umschlossen und/oder umrahmt. Weiterhin umfasst der innere Abschnitt die Eintrittsöffnung, die zum Einführen des freien Endes und somit des Spannstrangs ausgebildet ist und den Arretierbereich so relativ zu den Arretiermitteln anordnet oder ausrichtet, dass die Arretiermittel in einer der Arretierstufen festlegbar sind, um den zweiten Spannanker, insbesondere kraftschlüssig, mit dem zweiten Spannanker zu verbinden.

Zum Festlegen des zweiten Spannankers in einer der Arretierstufen muss der Spannstrang ausgehend vom freien Ende in die Eintrittsöffnung eingeführt werden und dann soweit durch die Eintrittsöffnung durchgeführt und/oder durchgeschoben werden, bis die Arretiermittel in einer geeigneten Arretierstufe festgelegt sind und der zweite Spannanker an der Seitenwand der Vorratseinheit, insbesondere außenseitig zur zweiten Seitenwand, anliegt, um durch den zweiten Spannanker die weitere Krafteintragsfläche für die zweite Seitenwand auszubilden.

Die Eintrittsöffnung ist bevorzugt als eine Materialaussparung oder Materialausnehmung im inneren Abschnitt ausgebildet. Die Arretiermittel treten im Spannzustand bevorzugt umfangsseitig, weiter bevorzugt an zwei oder vier gegenüberliegenden Seiten des Spannstrangs mit dem Arretierbereich und somit dem Spannstrang in Wirkkontakt, weshalb die Arretierstufen im Spannstrang bevorzugt entlang der gesamten Umfangsrichtung ausgebildet sind. Vorteilhaft führt dies zu einem zuverlässigen Festlegen des zweiten Spannankers im Arretierbereich des Spannstrangs, um die Spanneinheit robust auszugestalten, so dass diese hohen Zugkräften standhalten kann.

Die erfindungsgemäße Ausgestaltung des zweiten Spannankers führt zu einem verbesserten Festlegen des zweiten Spannankers in einer der Arretierstufen im Spannzustand. Aufgrund der vollständigen Umrahmung des Spannstrangs durch den zweiten Spannanker, insbesondere durch den äußeren Abschnitt, wird somit das versehentliche Lösen des zweiten Spannankers, insbesondere das seitliche Herausschieben des zweiten Spannankers wie es im gattungsbildenden Stand der Technik möglich ist, beim Be- und Entladen trotz einer seitlichen Kraftbeaufschlagung der zweiten Ankereinheit weitestgehend verhindert. Gerade der Verzicht auf die schlitzartige Aussparung verringert die Angriffsmöglichkeiten, die zu einem ungewollten Lösen des Spannankers führen können. Die Handhabung der erfindungsgemäßen Spanneinheit und/oder die Handhabung einer Vorratseinheit mit der erfindungsgemäßen Spanneinheit ist somit insbesondere beim Be- und Entladen eines Laderaums eines Lastwagens mit einer Vielzahl von Vorratseinheiten, die zueinander unmittelbar benachbart angeordnet und/oder gestapelt werden, vereinfacht, da es nichtmehr zu einem versehentlichen Lösen des zweiten Spannankers aus dem Arretierbereich kommen kann.

Das Trennen und/oder Wiederlösen des zweiten Spannankers vom Spannstrang kann - wie nachfolgend noch im Detail erläutert werden wird - je nach Ausgestaltung des Spannankers möglich oder unmöglich sein, wobei je nach Anwendungsgebiet oder Anwendungsfall der Spanneinheit einem entsprechenden Spannanker der Vorzug gewährt werden kann. Um bei einem nicht von der Erfindung umfassten Spannanker bei dem ein Wiederlösen nicht vorgesehen ist, die Spanneinheit von der Vorratseinheit zu lösen, also den Spannzustand zu beenden, um beispielsweise eine faltbare Vorratseinheit in einen ursprünglichen Flachzustand für einen Rücktransport zwecks Wiederverwendung zu überführen, muss die Spanneinheit, insbesondere im Bereich des Spannstrangs, zerteilt, bevorzugt zerschnitten, und damit zerstört werden. Die Spanneinheit, insbesondere der Spannstrang, ist in diesem Fall als Einweg-Ware ausgebildet und wird nach der Verwendung insbesondere nicht erneut verwendet. Der Vorteil besteht aber darin, dass das unabsichtliche Lösen des Spannankers vollständig verhindert wird. Erfindungsgemäß kommt, wie weiter unten noch genauer beschrieben, ein Spannanker zum Einsatz, der die Gefahr des unabsichtlichen Lösens durch den erfindungsgemäßen, in Umfangsrichtung geschlossenen, äußeren Abschnitt und dabei unter Vermeidung der bekannten schlitzartigen Aussparung stark verringert, wenn auch nicht unmöglich macht, der aber gleichzeitig reversibel zerstörungsfrei vom Spannstrang getrennt und wiederverwendet werden kann.

Nachfolgend wird zunächst eine erste, alternative, nicht von der Erfindung umfasste Ausführungsform des Spannankers beschrieben, die ein zerstörungsfreies Wiederlösen des Spannankers nicht vorsieht.

In einer bevorzugten Ausführungsform umfassen die Arretiermittel einen die Eintrittsöffnung vollständig umrahmenden und/oder begrenzenden Randabschnitt, wobei der Randabschnitt so ausgebildet ist, dass dieser in eine der Arretierstufen des Arretierbereichs festlegbar ist.

Der Randabschnitt ist bevorzugt durch einen Bereich des inneren Abschnitts ausgebildet, der die Eintrittsöffnung in Umfangsrichtung umrandet, bevorzugt unmittelbar begrenzt, weiter bevorzugt innerhalb des zweiten Spannankers und/oder des inneren Abschnitts ausbildet. Der Randabschnitt, der sich umfangsseitig der Eintrittsöffnung in eine Tiefe und/oder Radialrichtung in Richtung des äußeren Abschnitts erstreckt, ist in Bezug auf die Tiefe und/oder Radialrichtung variierend und/oder unterschiedlich breit und/oder dick ausgebildet. Der Randabschnitt kann beispielsweise eine runde oder ovale oder zacken- oder sternförmige Ausgestaltung aufweisen und somit eine runde, ovale, zacken- oder sternförmige Eintrittsöffnung, also eine Eintrittsöffnung mit einer runden oder ovalen oder zacken- oder sternförmige Innenkontur umfassen.

Weiterhin ist es in diesem Zusammenhang bevorzugt vorgesehen, dass die Vielzahl der Arretierstufen oder Raststufen längsschnittlich eine sägezahnförmige Kontur mit schräg ausgerichteten Gleitflächen und vertikal ausgerichteten Stirnflächen aufweisen, um das Festlegen des zweiten Spannankers so zu realisieren, dass es beim Einführen des zweiten Spannankers zunächst zu einem elastischen Verformen des Randabschnitts beim Entlanggleiten über die verschiedenen Gleitflächen kommt, wobei der Randabschnitt dann im Wesentlichen parallel zur Stirnfläche ausgerichtet ist und wenigstens bereichsweise an dieser anliegt, um entgegen der Einführrichtung das Herausführen des zweiten Spannankers zu verhindern.

**In** einer bevorzugten Ausführungsform umfasst der Randabschnitt wenigstens drei, bevorzugt wenigstens vier, Rastnasen, die insbesondere kuchenstückförmig ausgebildet sind und die bereichsweise in die Eintrittsöffnung so hineinragen, dass die wenigstens drei, bevorzugt wenigstens vier, Rastnasen endseitig in Eingriff mit einer der Arretierstufen bringbar sind.

Die Rastnasen sind bevorzugt so ausgebildet, dass diese zum Festlegen des zweiten Spannankers im Arretierbereich endseitig mit den Arretierstufen zusammenwirken. Weiterhin sind die Rastnasen bevorzugt zueinander gegenüberliegend und/oder in Umfangsrichtung voneinander beabstandet und/oder gleichmäßig verteilt angeordnet und insbesondere so ausgebildet, dass die Rastnasen beim Einführen des zweiten Spannankers in eine der Arretierstufen sich, insbesondere beim Gleiten über die Gleitflächen, elastisch verformen.

Weiterbildend ist es vorgesehen, dass die wenigstens drei Rastnasen in Umfangsrichtung durch wenigstens drei schlitzförmige Materialaussparungen begrenzt sind, oder dass die wenigstens vier Rastnasen in Umfangsrichtung durch wenigstens vier schlitzförmige Materialaussparungen begrenzt sind.

Anders ausgedrückt, der Randabschnitt umfasst wenigstens drei, bevorzugt wenigstens vier, schlitzförmige Materialaussparungen, die insbesondere in Umfangsrichtung zwischen zwei benachbarten Rastnasen angeordnet sind. Die schlitzförmigen Materialaussparungen sind bevorzugt im inneren Abschnitt ausgebildet, können sich bevorzugt auch bereichsweise im äußeren Abschnitt erstrecken.

Vorteilhaft führen die schlitzförmigen Materialaussparungen, die die Rastnasen in Umfangsrichtung begrenzen, zu einer verbesserten elastischen Verformung der Rastnasen.

Weiterbildend ist es vorgesehen, dass die Arretiermittel, insbesondere der innere Abschnitt, so in einer Vertiefung und/oder Senke, die vom zweiten Spannanker, insbesondere vom äußeren Abschnitt, ausgebildet ist, angeordnet sind, dass im Spannzustand wenigstens eine der Arretierstufen in der Vertiefung und/oder Senke anordenbar ist.

Im Spannzustand ermöglicht die Vertiefung und/oder Senke vorteilhaft, dass ein Überragen eines Endstücks des Spannstrangs, der sich in Längsrichtung hinter der Arretierstufe erstreckt, in der die Arretiermittel festgelegt sind, verhindert wird. Vorteilhaft wird im Spannzustand der Spannstrang durch einen Seitenschneider so gekürzt, dass der in Längsrichtung die Arretiermittel überragende Bereich, insbesondere das Endstück, des Spannstrangs vollständig in der Senke aufgenommen ist.

Auch dies verbessert die Handhabung der Vorratseinheit, da es nicht zu einer Beschädigung einer weiteren Vorratseinheit bei einem unmittelbar benachbarten Anordnen durch eine scharfe Schnittkante des gekürzten Spannstrangs kommen kann.

Nachfolgend wird die erfindungsgemäße, Ausführungsform des zweiten Spannankers beschrieben, die die Gefahr eines unbeabsichtigten Lösens deutlich verringert und gleichzeitig die zerstörungsfreie Wiederverwendung von Spannanker und Spannstrang oder ein Wiederlösen des zweiten Spannankers ermöglicht.

Erfindungsgemäß ist dabei vorgesehen, dass die Eintrittsöffnung zum Einführen des freien Endes und zum Führen und/oder Positionieren des Arretierbereichs im Spannzustand zwei Abschnitte aufweist, wobei ein erster Abschnitt mit einem größeren Querschnitt das Einführen des freien Endes ermöglicht und ein zweiter Abschnitt mit einem kleineren Querschnitt ein Positionieren oder Befestigen des Arretierbereichs im Spannzustand ermöglicht.

Der größere Querschnitt ist, einigermaßen selbstverständlich, so ausgebildet, dass dieser größer ausfällt als der maximale Durchmesser des Spannankers. Dadurch kann das freie Ende und auch die sonstigen Bereiche des Spannstrangs durch den ersten Abschnitt der Eintrittsöffnung mit dem größeren Querschnitt geführt werden. Der kleinere Querschnitt des zweiten Abschnitts der Eintrittsöffnung ist so ausgebildet, dass ein Verklemmen oder Verrasten mit dem Arretierbereich, insbesondere mit Arretierstufen des Arretierbereichs, ermöglicht und damit die Herstellung und Aufrechterhaltung eines Spannzustandes erreicht wird.

Die Funktion oder Bedienung des Spannankers ist in dieser Ausgestaltung grundsätzlich dergestalt, dass der Spannstrang zunächst mit dem freien Ende durch den ersten Abschnitt der Eintrittsöffnung eingeführt und der Spannstrang auf Spannung gebracht oder angezogen wird und im angezogenen Zustand der Spannanker so relativ verschoben oder gegenüber dem Spannstrang bewegt wird, dass, bevorzugt ohne Verminderung oder Aufhebung der Vorspannung, der Spannstrang, insbesondere der Arretierbereich, in den zweiten Abschnitt der Eintrittsöffnung überführt wird und dort eine Verrastung oder Verklemmung hervorruft. Diese Relativbewegung ist bevorzugt reversibel oder umgekehrt ausführbar, sodass eine Lösung des Spannzustandes zerstörungsfrei erreicht werden kann, indem der Spannanker gegenüber dem Spannstrang, insbesondere dem Arretierbereich, verschoben oder bewegt wird, so dass Letztgenannter aus dem zweiten Abschnitt der Eintrittsöffnung in den ersten Abschnitt der Eintrittsöffnung zurückkehrt, in dem dann die Spannung aufgehoben und der Spannanker gelöst oder entfernt werden kann.

Gemäß einer besonders vorteilhaften Ausführungsform kann vorgesehen sein, dass der erste Abschnitt und der zweite Abschnitt der Eintrittsöffnung über eine Engstelle miteinander verbunden sind. Die Engstelle stellt damit einen Wiederstand dar, der jeweils bei der Überführung des Spannstrangs vom ersten Abschnitt in den zweiten Abschnitt und umgekehrt überwunden werden muss. Mit anderen Worten ausgedrückt, führt die Engstelle und deren Überwindung mit dem Spannstrang jeweils zum Herstellen des Spannzustandes und zum Lösen des Spannzustandes.

Ebenfalls kann besonders bevorzugt in einer weiteren Ausgestaltung vorgesehen sein, dass der zweite Abschnitt der Eintrittsöffnung in Längsrichtung ein sich aufweitenden Querschnitt, bevorzugt in der Form eines Kegelstumpfes aufweist, insbesondere mit einem Aufweitungswinkel, der im Wesentlichen einem Winkel zwischen benachbarten Arretierungsstufen des Arretierbereichs entspricht. Damit kann besonders vorteilhaft erreicht werden, dass eine verhältnismäßig großflächige Anlage und damit ein verhältnismäßig großflächiger Formschluss zwischen dem Arretierbereich, insbesondere den Arretierungsstufen, des Spannstrangs einerseits und des zweiten Spannankers andererseits im Spannzustand, in dem der Spannstrang durch den zweiten Abschnitt der Eintrittsöffnung verläuft, erreicht wird, sodass eine besonders sichere und zuverlässige Verspannung, insbesondere Verrastung oder Verklemmung zwischen Spannstrang und Spannanker hergestellt werden kann.

Ebenfalls kann vorteilhaft in einer Ausgestaltung vorgesehen sein, dass die Engstelle einseitig oder beidseitig elastisch verformbar ausgebildet ist.

Die Begrifflichkeiten einseitig und beidseitig sollen dabei nicht mit den Begriffen "in einer Richtung" oder "in beiden Richtungen" verwechselt oder gleichgesetzt werden. Der Übergang zwischen dem ersten Abschnitt und dem zweiten Abschnitt der Eintrittsöffnung wird entlang der Kontur der Eintrittsöffnung durch zwei, im Wesentlichen gegenüberliegende, Abschnitte der Kontur erreicht. Eine einseitige Verformbarkeit der Engstelle soll also so verstanden werden, dass einer dieser Abschnitte der Kontur verformbar ist. Entsprechend soll eine beidseitige Verformbarkeit so verstanden werden, dass beide, bevorzugt gegenüberliegende, Abschnitte der Kontur der Eintrittsöffnung, die die Engstelle ausbilden oder begrenzt, eine elastische Verformbarkeit aufweisen.

Die Verformbarkeit dient dazu, dass der Spannstrang mit verhältnismäßig kleinen Kräften, bevorzugt unter einer zeitweisen Verformung, insbesondere Aufweitung, der Engstelle aus dem ersten Abschnitt der Eintrittsöffnung in den zweiten Abschnitt der Eintrittsöffnung überführt werden kann und nach dem Passieren der Engstelle trotzdem eine möglichst gute und sichere Verrastung oder Befestigung des Spannankers am Spannstrang erreicht wird, indem insbesondere die elastisch verformbare Engstelle teilweise oder vollständig in die Ausgangsform zurückgeführt oder zurückverformt wird.

Gleiches gilt auch für die Rücküberführung des Spannstrangs vom zweiten Abschnitt der Eintrittsöffnung in den ersten Abschnitt der Eintrittsöffnung.

Weiterhin kann besonders vorteilhaft vorgesehen sein, dass die Verformbarkeit der Engstelle durch Materialausnehmungen in radial außenseitig zu der Engstelle befindlichen Bereichen des inneren Abschnitts des Spannankers bewirkt wird. Durch entsprechende Materialausnehmungen kann die elastische Verformbarkeit der Engstelle besonders einfach hergestellt und auch eingestellt werden. Denn je weiter die Materialaussparungen von der Engstelle entfernt sind, desto steifer wird die elastische Verformbarkeit der Engstelle ausfallen. Derartige Materialausnehmungen lassen sich gleichzeitig, beispielsweise im Rahmen eines Spritzgussherstellungsprozesses zur Herstellung des zweiten Spannankers, ohne besondere Herausforderungen einfach und kostengünstig realisieren.

Gemäß einer ebenfalls besonders bevorzugten Ausführungsform der Spanneinheit kann vorgesehen sein, dass die Materialausnehmungen so angeordnet sind, dass die Engstelle durch als Federn wirkende Materialstege begrenzt wird. Dadurch wird in vorteilhafter Weise erreicht, dass die Engstelle eine entsprechende Vorspannung und damit eine entsprechend hohe elastische Rückstellkraft oder Rückstellneigung aufweist, sodass zwar einerseits eine Verformung der als Federn wirkenden Materialstege erreicht werden kann, gleichzeitig jedoch nach Passieren des Spannstrangs durch die Engstelle eine hohe Rückstellkraft oder Rückstellneigung dafür sorgt, dass die Engstelle teilweise oder vollständig in die Ausgangsposition zurückverformt wird und somit eine gute und sichere Fixierung des Spannankers und sichere Herstellung sowie Aufrechterhaltung des Spannzustandes sichergestellt wird.

**In** einer besonders vorteilhaften Ausgestaltung kann zudem vorgesehen sein, dass der äußere Abschnitt, bevorzugt an einem äußeren Rand, ein Vorsprung aufweist, der im Wesentlichen in der Verlängerung eines Mittelpunkts des ersten Abschnitts der Eintrittsöffnung und eines Mittelpunkts des zweiten Abschnitts der Eintrittsöffnung angeordnet ist. Der Vorsprung kann dazu dienen mit entsprechenden Werkzeugen oder werkzeuglos die Bewegung oder Verschiebung des Spannankers, im Wesentlichen rechtwinklig zur Längsachse des Spannstrangs, durch eine Relativbewegung gegenüber dem Spannanker zu bewirken und dabei den Spannstrang vom ersten Abschnitt der Eintrittsöffnung in den zweiten Abschnitt der Eintrittsöffnung zu überführen, oder umgekehrt.

**In** einer bevorzugten Ausführungsform sind die Arretierstufen im Spannstrang an wenigstens zwei gegenüberliegenden Außenseiten des Spannstrangs ausgebildet.

Anders ausgedrückt, die Vielzahl der Arretierstufen oder Raststufen, die bevorzugt längsschnittlich eine sägezahnförmige Kontur mit schräg ausgerichteten Gleitflächen und vertikal ausgerichteten Stirnflächen aufweisen, sind bevorzugt an zwei gegenüberliegenden Außenseiten des Spannstrangs ausgebildet und wirken somit auch mit wenigstens zwei Rastnasen zusammen. Vorteilhaft sind die Arretiermittel und der Arretierbereich somit robust ausgestaltet, um auch bei hohen Kräften ein Lösen des zweiten Spannankers aus einer der Arretierstufen, in der er zuvor festgelegt wurde, zu verhindern.

Weiterbildend ist es vorgesehen, dass der Spannstrang eine runde oder eine ovale Querschnittsfläche aufweist, wobei es in diesem Zusammenhang weiterbildend vorgesehen ist, dass die Arretierstufen umfangsseitig zum Spannstrang durchgehend beständig, insbesondere flächig und/oder gleichmäßig, ausgebildet sind.

Ferner ist es weiterbildend beabsichtigt, dass der Endabschnitt des Spannstrangs am freien Ende eine Spitze ausbildet, um das Durchstoßen einer Seitenwand zu ermöglichen. Vorteilhaft wird somit eine werkzeuglose Montage der Spanneinheit erzielt.

Gemäß einer bevorzugten Ausgestaltung der vorliegenden Erfindung umfasst der Spannstrang zum Ausbilden der Arretierstufen eine Abfolge und/oder Folge und/oder Kette von jeweils eine ringförmige Stirnfläche umfassenden Kegelstupfabschnitten, die so ausgebildet sind, dass die Arretiermittel, insbesondere der Randabschnitt oder die Rastnasen, in Eingriff mit einer der ringförmigen Stirnfläche eines der Kegelstupfabschnitte bringbar sind.

Die ringförmigen Stirnflächen, die vom runden Spannstrang in Radialrichtung ausgebildet sind, verbinden somit jeweils zwei Mantelflächen zweier benachbarter Kegelstupfabschnitte.

Zum Festlegen des zweiten Spannankers wird das freie Ende des Spannstrangs in die Eintrittsöffnung eingeführt, wobei beim relativen Verschieben des zweiten Spannankers längs des Spannstrangs der elastisch verformbare Randabschnitt und/oder die elastisch verformbaren Rastnasen über die schräge Mantelfläche gleiten.

Im Rahmen einer Weiterbildung ist es vorgesehen, dass der erste Spannanker und/oder der zweite Spannanker tellerförmig ausgebildet ist und wenigstens ein in Radialrichtung ausgebildetes Versteifungselement umfasst, das insbesondere stab- oder stegförmig ausgebildet ist.

Vorteilhaft führt das in Radialrichtung im inneren Abschnitt und/oder äußeren Abschnitt ausgebildete Versteifungselement zu einer verbesserten Formstabilität des zweiten Spannankers. Gleichzeitig führen die Versteifungselemente zu einer vorteilhaften Materialreduzierung, weshalb die Spanneinheit kostengünstiger herstellbar ist.

Weiterbildend ist vorgesehen, dass der erste Spannanker und der Spannstrang zueinander monolithisch und/oder einstückig und/oder integral ausgebildet sind und insbesondere mittels Spritzguss-Technik aus einem Guss, insbesondere einem Spritzguss, herstellbar oder hergestellt sind.

Das monolithische Erzeugen des ersten Spannankers zusammen mit dem Spannstrang führt zu einer kostengünstigen Herstellungsart der Spanneinheit. Ferner kann eine maximale Zugkraft, die im Spannzustand auf den ersten Spannanker einwirkt, durch die monolithische Verbindung zwischen erstem Spannanker und Spannstrang maximiert werden. Für große Stückzahlen lassen sich durch die Spritzguss-Technik geringe Herstellkosten für die Spanneinheit realisieren.

Der Spannstrang umfasst weiterbildend wenigstens zwei Arretierbereiche, die sich in Bezug auf die Längserstreckung des Spannstrangs in unterschiedlichen Abschnitten erstrecken. Bevorzugt ist zwischen einem ersten Arretierbereich und einem zweiten Arretierbereich wenigstens ein Verbindungsabschnitt angeordnet, der in Längsrichtung den ersten Arretierbereich vom zweiten Arretierbereich beabstandet.

Der Verbindungsabschnitt umfasst insbesondere keine Arretierstufen und unterscheidet sich bevorzugt in seiner Oberflächenbeschaffenheit von den wenigstens zwei Arretierbereichen.

Im Zusammenhang mit rechteckförmigen Vorratseinheiten kann somit eine Spanneinheit zum Abspannen über die Breitenerstreckung mittels des ersten Arretierbereichs und zum Abspannen über die Längenerstreckung mittels des zweiten Arretierbereichs verwendet werden.

Eine bevorzugte Weiterbildung sieht ferner vor, dass der Spannstrang in Längsrichtung so ausgebildet ist, dass der erste Arretierbereich zum Zusammenwirken mit gegenüberliegenden beabstandeten Seitenwänden einer Vorratseinheit im Bereich von im Wesentlichen 600mm, insbesondere zwischen 540mm bis 630mm, ausgebildet ist und dass der wenigstens eine zweite Arretierbereich zum Zusammenwirken mit gegenüberliegenden beabstandeten Seitenwänden einer Vorratseinheit im Bereich von im Wesentlichen 800mm, insbesondere zwischen 740mm bis 830mm, ausgebildet ist.

Eine besonders bevorzugte Weiterbildung sieht ferner vor, dass der Spannstrang einen dritten Arretierbereich umfasst, wobei der dritte Arretierbereich zum Zusammenwirken mit gegenüberliegenden Seitenwänden einer Vorratseinheit im Bereich von im Wesentlichen 1200mm, insbesondere ausgehend vom ersten Spannanker zwischen 1140mm bis 1230mm, ausgebildet ist.

Alternativ ist es auch bevorzugt, wenn der erste Arretierbereich und der dritte Arretierbereich vertauscht sind. Somit ist bei dieser Ausführungsform der erste Arretierbereich zum Zusammenwirken mit gegenüberliegenden Seitenwänden einer Vorratseinheit im Bereich von im Wesentlichen 1200mm ausgebildet und erstreckt sich dann insbesondere ausgehend vom ersten Spannanker in einem Bereich von 1140mm bis 1230mm. Der dritte Arretierbereich ist entsprechen insbesondere in einem Bereich von im Wesentlichen 600mm ausgebildet und erstreckt sich dann insbesondere ausgehend vom ersten Spannanker in einem Bereich von 540mm bis 630mm.

Ferner wird im Rahmen der vorliegenden Erfindung auch Schutz für eine Vorratseinheit, insbesondere ein Karton, mit gegenüberliegenden Seitenwänden, insbesondere Kartonwänden, beansprucht, die einen Aufnahmeraum für Schüttgut, insbesondere Kunststoffgranulat mantelseitig begrenzen und wenigstens eine erfindungsgemäße Spanneinheit zum Verspannen von zwei gegenüberliegenden Seitenwänden umfassen.

Weitere Vorteile, Merkmale und Einzelheiten der Erfindung ergeben sich aus den nachfolgenden Beschreibungen bevorzugter Ausführungsbeispiele sowie anhand der Zeichnungen.

Diese zeigen in
- Fig. 1a, b:: verschiedene Ansichten einer nicht von der Erfindung umfassten Spanneinheit mit einem festgelegten zweiten Spannanker gemäß einer ersten, alternativen Ausführungsform;
- Fig. 2a, b:: eine Seitenansicht sowie eine Detailansicht im vergrößerten Maßstab des Spannstrangs gemäß der ersten, alternativen, nicht erfindungsgemäßen Ausführungsform;
- Fig. 3a-f:: verschiedene Ansichten des zweiten Spannankers gemäß der bereits bekannten ersten, alternativen, nicht erfindungsgemäßen Ausführungsform und
- Fig. 4:: eine perspektivische Seitenansicht einer Vorratseinheit, die zum Verspannen von gegenüberliegenden Seitenwänden insgesamt zwei gemäß der ersten Ausführungsform ausgebildete Spanneinheiten umfasst;
- Fig. 5a bis Fig. 5f:: verschiedene Ansichten des zweiten Spannankers gemäß einer erfindungsgemäßen zweiten Ausführungsform;
- Fig. 6a bis Fig. 6b:: zwei Ansichten des zweiten Spannankers gemäß der erfindungsgemäßen zweiten Ausführungsform in unterschiedlichen Zuständen oder Positionen im Bezug auf einen Spannstrang.

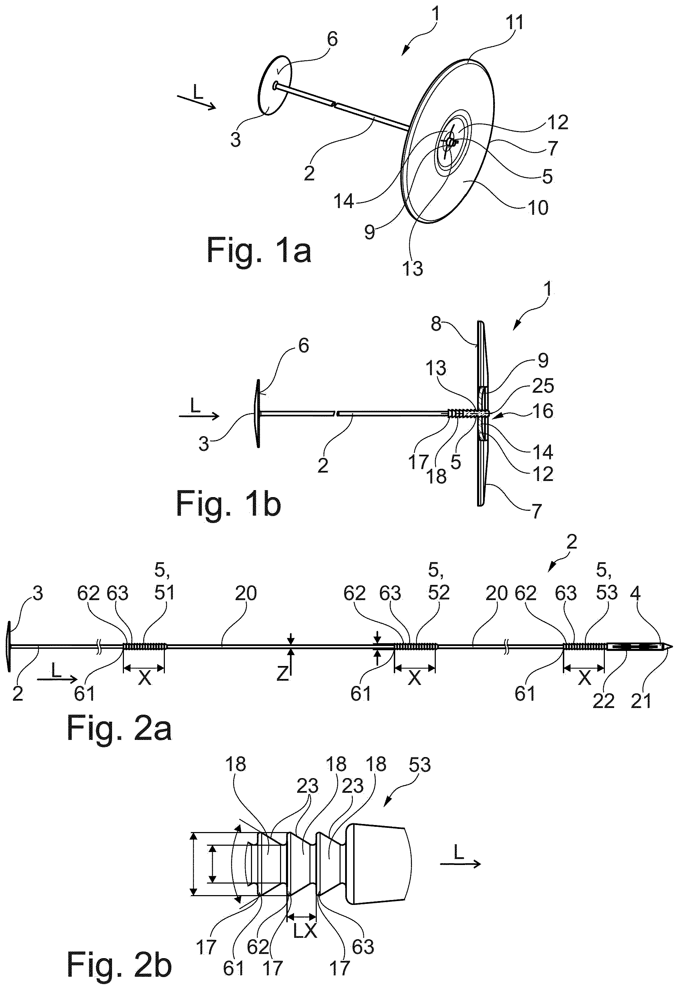

Die **Fig. 1a** zeigt eine nicht von der Erfindung umfasste Spanneinheit 1 mit einem festgelegten zweiten Spannanker 7 gemäß einer ersten Ausführungsform in einer perspektivischen Ansicht. Die Spanneinheit 1 umfasst einen Spannstrang 2, der sich entlang einer Längsrichtung L von einem ersten Spannanker 3 zu einem vom Spannstrang 2 ausgebildeten freien Ende 4, das in der **Fig. 2a** dargestellt ist, erstreckt.

Zwischen dem ersten Spannanker 3 und dem freien Ende 4 umfasst der Spannstrang 2 wenigstens ein Arretierbereich 5 mit einer Vielzahl von in Längsrichtung L zueinander benachbarten Arretierstufen 61, 62, 63, die in der **Fig. 2a** dargestellt sind und zum Zusammenwirken mit Arretiermitteln 9 des zweiten Spannankers 7 so ausgebildet sind, dass der zweite Spannanker 7, der zum den ersten Spannanker 3 aufweisenden Spannstrang 2 als separates und somit verbindbares Bauelement ausgebildet ist, in einer der Arretierstufen 61-63 festlegbar ist.

Der zweite Spannanker 7 umfasst einen äußeren Abschnitt 10 mit einer in Umfangsrichtung vollständig geschlossenen Außenkontur 11, die einen inneren Abschnitt 12 mit einer Eintrittsöffnung 13 aufweist. Die Eintrittsöffnung 13 ist zum Einführen des freien Endes 4 des Spannstrangs 2 ausgebildet und führt und/oder positioniert den Arretierbereich 5 des Spannstrangs 2 in einem später noch genauer beschriebenen Spannzustand der Spanneinheit 1.

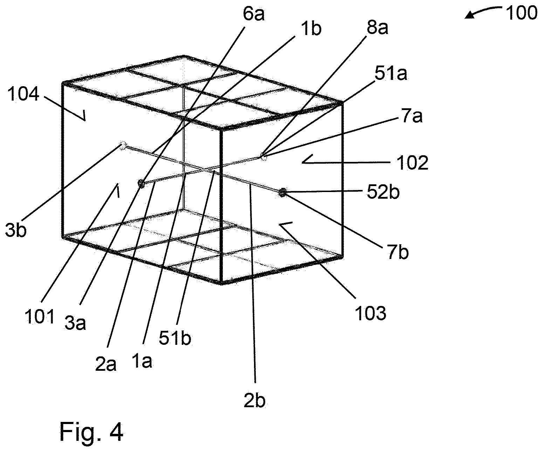

Der erste Spannanker 3 ist tellerförmig ausgebildet und erstreckt sich radialseitig zum runden Spannstrang 2, um in dem Spannzustand eine erste Krafteintragsfläche 6 für eine erste oder dritte Seitenwand 101, 103 einer in der **Fig. 4** dargestellten Vorratseinheit 100 auszubilden und diese somit abzustützen.

In der **Fig.** 1b ist die bereits bekannte, nicht von der Erfindung umfasste Spanneinheit 1 in einer schematischen Seitenansicht mit einer Schnittdarstellung im Bereich der Arretiermittel 9 abgebildet.

Der Spannstrang 2, der eine runde Querschnittsfläche aufweist, bildet die Arretierstufen 61-63 durch eine Abfolge von Kegelstumpfabschnitten 18 aus, die jeweils unmittelbar zueinander benachbart angeordnet sind.

Die Arretiermittel 9, die vorliegend im bereichsweisen Längsschnitt dargestellt sind, umfassen einen Randabschnitt 14, der die Eintrittsöffnung 13 radial außen umfangsseitig vollständig umgibt und im festgelegten Zustand des zweiten Spannankers 7 innenseitig in einer der Arretierstufen 61-63 festlegbar ist.

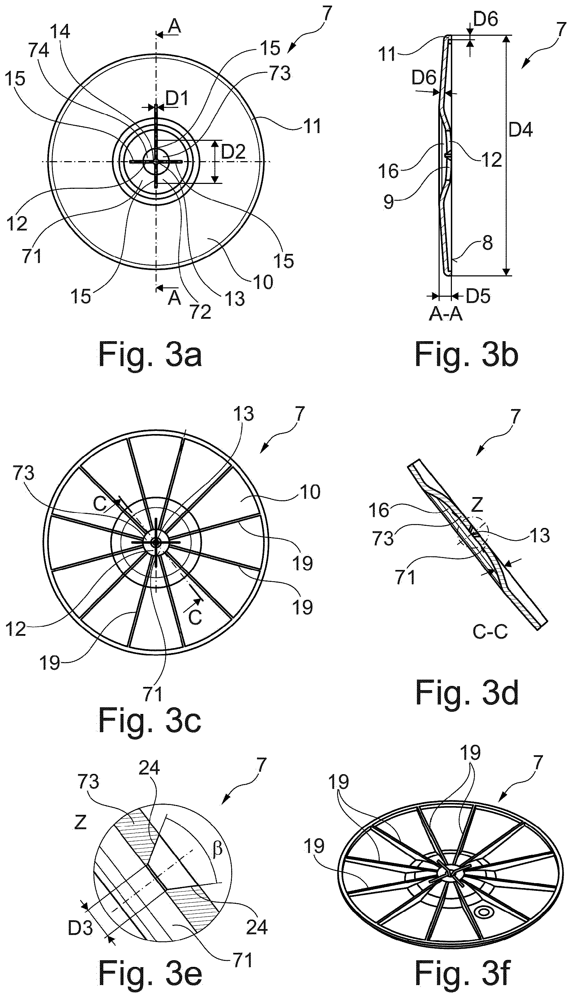

Mit Bezug auf die **Fig. 3a** wird deutlich, dass der Randabschnitt 14 durch vier Rastnasen 71-74 ausgebildet ist, die eine dreieck- oder kuchenstückförmige Ausgestaltung aufweisen. Weiterhin geht aus der Schnittdarstellung der Arretiermittel 9 hervor, dass diese eine Senke 16 ausbilden. Anders ausgedrückt, die Rückseite des zweiten Spannankers 7 ist im Bereich des inneren Abschnitts 12 bereichsweise zur rückseitigen Außenseite des zweiten Spannankers 7 zurückgesetzt, derart, dass im festgelegten Zustand des zweiten Spannankers 7 wenigstens einer der Arretierstufen 61-63 vollständig in der Senke 16 anordenbar ist.

Beim Verbinden des zweiten Spannankers 7 mit dem Spannstrang 2 zum Erzielen des Spannzustands wird der Spannstrang 2, insbesondere das freie Ende 4 des Spannstrangs 2, zunächst durch die Eintrittsöffnung 13 gesteckt und der zweite Spannanker 7 dann längs des Spannstrangs 2 entgegen der Längsrichtung L bis in einer der Arretierstufen 61-63 des Arretierbereichs 5 verschoben und/oder geführt.

Aufgrund der Ausgestaltung der Rastnasen 71-74 ist das Verschieben des zweiten Spannankers 7 entgegen der Einführrichtung, also in Längsrichtung L, nicht möglich, nachdem die Arretiermittel 9 in einer Arretierstufe 61-63 festgelegt wurden.

Vorteilhaft wird somit auch vom zweiten Spannanker 7 eine weitere Krafteintragsfläche 8 für eine zweite oder vierte Seitenwand 102, 104 ausgebildet, um zwei gegenüberliegende Seitenwände 101, 102, 103, 104 einer Vorratseinheit 100 mittels der Spanneinheit 1 zu verspannen.

Nachdem der zweite Spannanker 7 in der passenden Arretierstufe 61-63 festgelegt wurde, umfasst der Spannstrang 2 einen Endbereich, der in Längsrichtung L hinter den Arretiermitteln 9 angeordnet ist und sich bis zum freien Ende 4 des Spannstrangs 2 erstreckt. Der Endbereich des Spannstrangs 2 wird bevorzugt, insbesondere mittels eines Seitenschneiders, abgetrennt. Vorteilhaft verhindert dies, dass es durch den überstehenden Endbereich des Spannstrangs 2 und/oder das lose Ende des Spannstrangs 2 zu einer nachteiligen Beeinträchtigung beim unmittelbar benachbarten Anordnen und/oder Lagern von mehreren Vorratseinheiten 100 kommt.

Der Endbereich des Spannstrangs 2 ist anders ausgedrückt durch einen Teilbereich des Spannstrangs 2 definiert, der sich in Längsrichtung L hinter der gewählten Arretierstufe erstreckt, in der die Arretiermittel 9 festgelegt wurden.

Durch das Abtrennen des Endbereichs entsteht ein Endstück 25 des Spannstrangs 2, das sich ausgehend von der Arretierstufe, in der die Arretiermittel 9 festgelegt sind, bis zu der Schnittfläche des Spannstrangs 2 erstreckt, die durch das Abtrennen des Endbereichs entstanden ist. Das Endstück 25 ist im Spannzustand bevorzugt vollständig in der Senke 16 anordenbar, um eine negative Beeinträchtigung, insbesondere durch die scharfe Schnittkante, zu verhindern.

Die **Fig. 2a** zeigt den Spannstrang 2 in einer Seitenansicht. Aus dieser Darstellung geht hervor, dass der Spannstrang 2 zwischen dem ersten Spannanker 3 und dem freien Ende 4 insgesamt drei Arretierbereiche 51, 52, 53 umfasst. Die Arretierbereiche 51-53 erstrecken sich umfangsseitig des Spannstrangs 2 entlang der Längsrichtung L in einem Bereich X von jeweils im Wesentlichen 30mm. Jeder Arretierbereich 51-53 umfasst eine Vielzahl von Arretierstufen 61-63, die das Festlegen des zweiten Spannankers 7 ermöglichen und somit eine stufenförmige Anpassung der Spanneinheit 1 an die Dimensionsmaße der Vorratseinheit 100 erzielen.

Weiterhin geht aus der Seitendarstellung hervor, dass der Spannstrang 2 am freien Ende 4 eine Spitze 21 und einen Griffabschnitt 22 umfasst, um den Spannstrang 2 mittels der Spitze 21 durch die Seitenwand 101-104 einer aus Karton ausgebildeten Vorratseinheit 100 zu stoßen.

Zwischen dem ersten Arretierbereich 51 und dem zweiten Arretierbereich 52 umfasst der Spannstrang 2 einen Verbindungsabschnitt 20. Ferner umfasst der Spannstrang 2 zwischen dem zweiten Arretierbereich 52 und dem dritten Arretierbereich 53 einen weiteren Verbindungsabschnitt 20. Im Verbindungsabschnitt 20 umfasst der Spannstrang 2 keine Arretierstufen 61-63. Bevorzugt umfasst der Spannstrang 2 im Verbindungsabschnitt 20 eine Breitenerstreckung Z von im Wesentlichen 2,5mm.

Die **Fig. 2b** zeigt bereichsweise den dritten Arretierbereich 53 des Spannstrangs 2 im vergrößerten Maßstab. Der Arretierbereich 53 ist durch eine Abfolge von mehreren Kegelstupfabschnitten 18 ausgebildet. Jeder Kegelstupfabschnitt 18 umfasst eine ringförmige Stirnfläche 17 und eine mantelseitige Gleitfläche 23.

Die ringförmige Stirnfläche 17 sind zum Spannstrang 2 radial abragend ausgebildet und liegen somit in einer Ebene, die senkrecht zum Spannstrang 2 ausgerichtet ist. Die mantelseitige Gleitfläche 23 umfasst in einer Längsschnittansicht eine winklig zum Spannstrang 2 ausgebildete Außenkontur. Anders ausgedrückt umfasst der Arretierbereich 53 in der dargestellten Ausführungsform längsschnittlich eine im Wesentlichen sägezahnförmige Außenkontur, die über den gesamten Umfang des Spannstrangs 2 ausgebildet ist.

Die Kegelstupfabschnitte 18 sind so ausgebildet, dass die Rastnasen 71-74 endseitig in Eingriff mit einer der ringförmigen Stirnflächen 17 treten, um somit das Verschieben des zweiten Spannankers 7 längs des Spannstrangs 2 nur entgegen der Längsrichtung L zu ermöglichen.

Die Kegelstupfabschnitte 18 ermöglichen, dass die Arretiermittel 9 an einer beliebigen umfangsseitigen Position in Wirkkontakt mit einer der ringförmigen Stirnflächen 17 treten können, um eine Kraft vom zweiten Spannanker 7 in den Spannstrang 2 zu übertragen. Jeder Kegelstumpfabschnitt 18 weist in der vorliegenden Ausführungsform in Längsrichtung L eine Längserstreckung Lx von im Wesentlichen 2mm auf.

Beim Führen des zweiten Spannankers 7 längs des Spannstrangs 2 zum Herstellen des Spannzustands verformen sich die Rastnasen 71-74 elastisch im Arretierbereich 5, was durch die in Bezug auf die Einführrichtung ansteigenden Gleitflächen 23 der Kegelstupfabschnitte 18 erzielt wird. Die radial ausgerichteten Stirnflächen 17 bilden im Spannzustand eine Krafteintragsfläche für Endbereiche der Rastnasen 71-74 aus, um eine Kraft vom zweiten Spannanker 7 in den Spannstrang 2 zu übertragen und somit das Verspannen der Seitenwände zu erzielen.

Die **Fig. 3a bis 3f** zeigen den zum Spannstrang 2 als separates Bauteil ausgebildeten zweiten Spannanker 7 gemäß der ersten, nicht erfindungsgemäßen Ausführungsform in Einzeldarstellung aus unterschiedlichen Ansichten.

Die **Fig. 3a** zeigt den zweiten Spannanker 7 in Rückansicht. Der zweite Spannanker 7 weist eine tellerförmige Ausgestaltung mit der runden, vollständig geschlossenen Außenkontur 11 auf, die von dem äußeren Abschnitt 10 des zweiten Spannankers 7 ausgebildet ist.

Der äußere Abschnitt 10 ist radial außen zum inneren Abschnitt 12 des zweiten Spannankers 7 angeordnet, der die Eintrittsöffnung 13 umfasst, die im Mittelpunkt des tellerförmigen zweiten Spannankers 7 angeordnet ist.

Die Eintrittsöffnung 13 wird, wie bereits erwähnt, durch den Randabschnitt 14 umfangsseitig und/oder radial außen umrahmt und/oder begrenzt.

Der Randabschnitt 14 umfasst die bereits erwähnten vier Rastnasen 71-74. Die vier Rastnasen 71-74 sind in Umfangsrichtung innerhalb des inneren Abschnitts 12 durch jeweils eine schlitzförmige Materialaussparung 15 begrenzt und/oder definiert, die sich ausgehend von der Eintrittsöffnung 13 jeweils in Radialrichtung erstrecken. Die Materialaussparung 15 umfasst eine Breitenerstreckung D1 von im Wesentlichen 0,8mm und ausgehend vom Mittelpunkt und/oder der Eintrittsöffnung 13 eine Längenerstreckung von D2/2 im Wesentlichen 10mm.

Die **Fig. 3b** zeigt eine Schnittansicht des zweiten Spannankers 7 nach der in der **Fig. 3a** eingezeichneten Perspektive A. Die Arretiermittel 9 des zweite Spannankers 7 sind so ausgebildet, dass die Rastnasen 71-74 die Senke 16 im inneren Abschnitt 12 ausbilden. Vorteilhaft kann somit das Endstück 25 des Spannstrangs 2 nach dem Abtrennen des losen Endes 4 des Spannstrangs 2 vollständig in der Senke 16 angeordnet werden.

Ferner geht aus dem Längsschnitt die Dimensionsmaße des zweiten Spannankers 7 gemäß der ersten Ausführungsform hervor. Der Durchmesser D4 des tellerförmigen zweiten Spannankers 7 beträgt im Wesentlichen 100mm, wobei der äußere Abschnitt 10 im Bereich der Außenkontur 11 eine Dicke D6 von im Wesentlichen 2mm umfasst. Die Tiefe D5 der ausgebildeten Senke 16 beträgt vorliegend im Wesentlichen 5mm.

Die **Fig. 3c** zeigt den zweiten Spannanker 7 in einer Vorderansicht. Neben der zentrisch im zweiten Spannanker 7 ausgebildeten Eintrittsöffnung 13 werden die vom zweiten Spannanker 7 umfasste Vielzahl von Versteifungselementen 19 sichtbar, die sich ausgehend vom inneren Abschnitt 12 in Radialrichtung über den äußeren Abschnitt 10 bis zur Außenkontur 11 erstrecken und somit im Spannzustand die Krafteintragsfläche 8 ausbilden.

Die **Fig. 3d** und **3e** zeigen eine weitere Schnittansicht des zweiten Spannankers 7 nach der in der **Fig. 3c** eingezeichneten Perspektive C. Nochmals wird die von den Rastnasen 71-74 ausgebildete Senke 16 und/oder Vertiefung sichtbar. Weiterhin zeigt die **Fig. 3e****,** bei der es sich um einen vergrößerten Teilbereich der **Fig. 3d** handelt, dass die Rastnasen 71-74 eine zur Eintrittsöffnung 13 geneigte Endfläche 24 umfassen, die so ausgebildet ist, dass diese im festgelegten Zustand auf der Gleitfläche 23, die vom Spannstrang 2 im Arretierbereich 5 ausgebildet wird, anliegt. Die Eintrittsöffnung 13 umfasst aufgrund der geneigten Endfläche 24 einen Durchmesser D3 von im Wesentlichen 2,2mm, wobei zwei gegenüberliegende Endflächen 24 längsschnittlich einen Winkel β von im Wesentlichen 60° aufspannen.

Weiterhin ist in der **Fig. 3f** der bekannte zweite Spannanker 7 in einer perspektivischen Ansicht dargestellt. Die stegförmig ausgebildeten Versteifungselemente 19 werden sichtbar, die sich im tellerförmigen zweiten Spannanker 7 in Radialrichtung erstrecken und somit im Spannzustand auf einer der Seitenflächen aufliegen, um die weitere Krafteintragsfläche 8 auszubilden.

In der **Fig. 4** ist eine Vorratseinheit 100, die aus Karton ausgebildet ist, dargestellt. Die Vorratseinheit 100 umfasst vier Seitenwände 101-104, die einen Aufnahmeraum für Schüttgut seitlich begrenzen.

Die Vorratseinheit 100 umfasst eine erste Spanneinheit 1a zum Verspannen der ersten und der zweiten Seitenwand 101, 102 über die Breitenerstreckung der Vorratseinheit 100 und eine zweite Spanneinheit 1b zum Verspannen der dritten und vierten Seitenwand 103, 104 über die Längenerstreckung der Vorratseinheit 100.

Im Spannzustand liegt der erste Spannanker 3a der ersten Spanneinheit 1a außenseitig zu der ersten Seitenwand 101 an, um für diese Seitenwand 101 eine Krafteintragsfläche 6a auszubilden und der zweite Spannanker 7a der ersten Spanneinheit 1a außenseitig zu der zweiten Seitenwand 102 an, um für diese Seitenwand 102 eine weitere Krafteintragsfläche 8a auszubilden.

Bei der ersten Spanneinheit 1a und der zweiten Spanneinheit 1b handelt es sich um das gleiche Bauteil, wobei der zweite Spannanker 7a der ersten Spanneinheit 1a zum Verspannen der Vorratseinheit 100 über die Breitenerstreckung im ersten Arretierbereich 51a und der zweite Spannanker 7b der zweiten Spanneinheit 1b zum Verspannen der Vorratseinheit 100 in Längenerstreckung im zweiten Arretierbereich 52b festgelegt wurde.

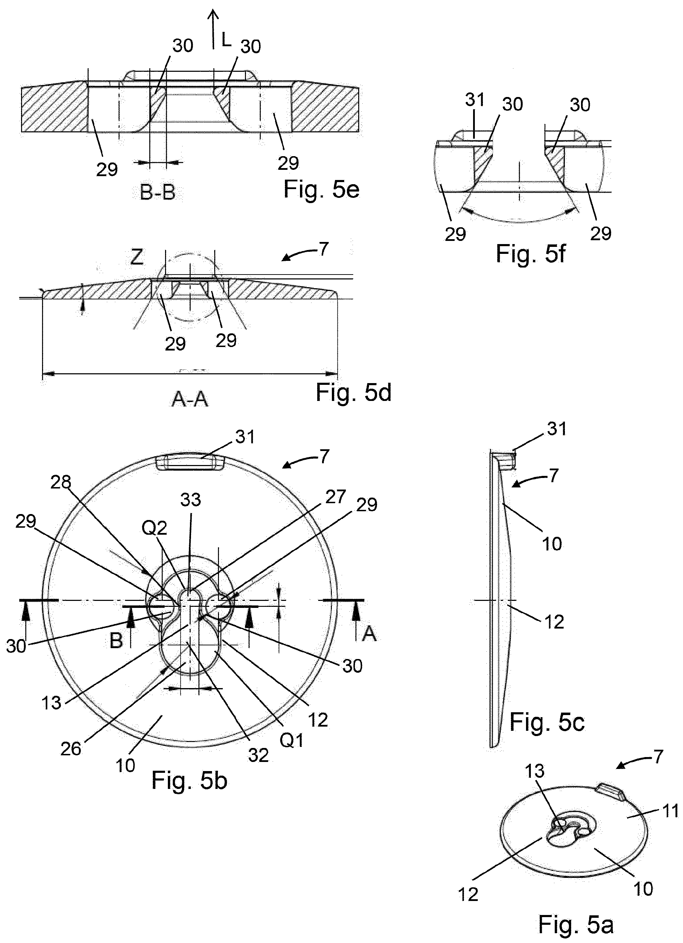

**Fig. 5a** zeigt eine perspektivische Darstellung eines zweiten Spannankers 7 gemäß einer zweiten, erfindungsgemäßen Ausführungsform. Der Spannanker 7 weist einen äußeren Abschnitt 10 mit einer in Umfangsrichtung vollständig geschlossenen Außenkontur 11 und einen inneren Abschnitt 12 mit einer Eintrittsöffnung 13 auf.

In der Frontansicht des Spannankers 7 in der **Fig. 5b** ist zu erkennen, dass die Eintrittsöffnung 13 einen ersten Abschnitt 26 mit einem größeren Querschnitt Q1, insbesondere mit einem größeren Radius und einen zweiten Abschnitt 27 mit einem kleineren Querschnitt Q2, insbesondere mit einem kleineren Radius aufweist. Der erste Abschnitt 26 ermöglicht das Einführen des freien Endes 4 sowie ein Durchführen des sonstigen Spannstrangs 2. Deshalb ist der erste Querschnitt Q1 größer als der maximale Durchmesser oder Querschnitt Q1 des Spannstrangs 2.

Der kleinere Querschnitt Q2 des zweiten Abschnitts 27 ist so ausgebildet, dass ein Verrasten oder Verhaken mit dem Spannstrang 2, insbesondere mit Arretierbereichen 5, 51, 52, 53 des Spannstrangs 2 ermöglicht wird. Zwischen dem ersten Abschnitt 26 und dem zweiten Abschnitt 27 ist eine Engstelle 28 angeordnet. Die Breite der Engstelle 28 ist in einer neutralen oder kraftfreien oder unverformten Position bevorzugt kleiner als die maximale Breite, insbesondere der Durchmesser, des zweiten Querschnitts Q2 des zweiten Abschnitts 27.

Radial außenseitig zur Engstelle 28 befinden sich im inneren Abschnitt 12 Materialausnehmungen 29, die eine Verformbarkeit der Engstelle 28 auf beiden Seiten bewirken. Weiterhin führen die Materialausnehmungen 29 dazu, dass die Engstelle 28 durch als Federn wirkende Materialstege 30 begrenzt oder ausgebildet wird.

Der äußere Abschnitt 10 weist an einem äußeren Rand einen Vorsprung 31 auf, der im Wesentlichen in der Verlängerung eines Mittelpunkts 32 des ersten Abschnitts 26 der Eintrittsöffnung 13 und einem Mittelpunkt 33 des zweiten Abschnitts 27 der Eintrittsöffnung 13 angeordnet ist. Mit dem Vorsprung 31 kann werkzeuglos oder mit entsprechenden Werkzeugen eine Verschiebung oder Verlagerung des Spannankers 7 gegenüber dem Spannstrang 2 und damit eine Überführung des Spannstrangs 2 vom zweiten Abschnitt 27 in den ersten Abschnitt 26, oder umgekehrt, bewirkt werden.

Der Vorsprung 31 ist auch in der Seitenansicht der **Fig. 5c** des Spannankers 7 gemäß der zweiten Ausführungsform gut erkennbar.

Die Fig. **5d** zeigt eine Schnittdarstellung durch den Spannankers 7 der zweiten, erfindungsgemäßen Ausführungsform entlang der Schnittebene A-A der Darstellung der Fig. 5b. In der Schnittdarstellung ist zu erkennen, dass sich die Materialausnehmungen 29 durch die gesamte Stärke oder entlang der gesamten Längsrichtung L des Spannankers 7 erstrecken.

Die **Fig. 5e** zeigt eine Schnittdarstellung durch den zweiten Spannanker 7 entlang der Schnittebene B-B der Darstellung der Fig. 5b und damit eine Schnittdarstellung entlang oder auf der Höhe der Engstelle 28 zwischen dem ersten Abschnitt 26 und dem zweiten Abschnitt 27. Auch darin sind erneut die Materialausnehmungen 29 zu erkennen. Gleichermaßen ist in der Darstellung zu erkennen, dass die als Federn wirkenden Materialstege 30, wie auch der sonstige zweite Abschnitt 27 einen sich in Längsrichtung L aufweitenden Querschnitt, bevorzugt in Form eines Kegelstumpfes, aufweisen. Diese können besonders vorteilhaft mit den Arretierungsstufen 61, 62, 63 gemäß der Darstellung der Fig. 2a und 2b zusammenwirken und eine effektive und stabile Befestigung oder Arretierung herbeiführen und damit die Sicherung des Spannzustandes bewirken.

Die **Fig. 5f** zeigt den in der Fig. 5d strichliniert dargestellten Ausschnitt Z in einer vergrößerten Darstellung. Darin sind abermals zu erkennen die Materialausnehmungen 29 seitlich zur Engstelle 28 und die daraus gebildeten als Federn wirkenden Materialstege 30, die eine elastische Verformbarkeit der Engstelle 28 bewirken.

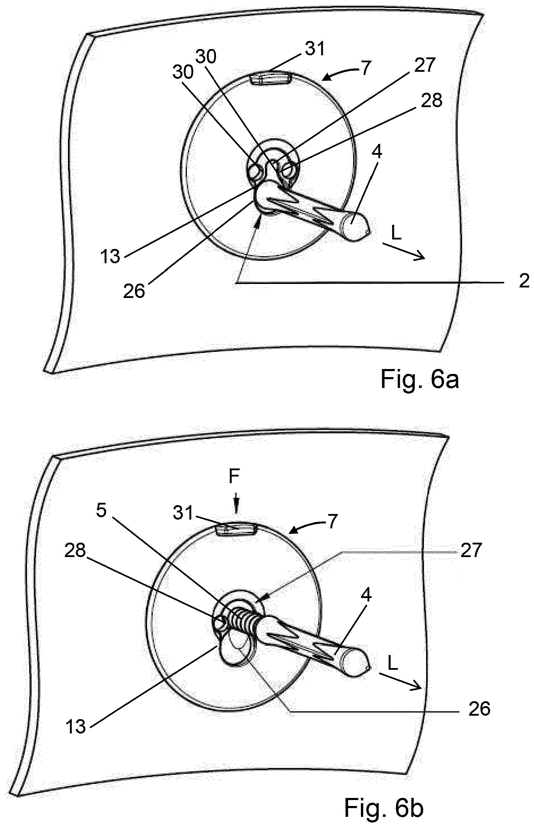

Die **Fig. 6a** zeigt einen zweiten Spannanker 7 sowie ein freies Ende 4 eines Spannstrangs 2 in einer Freigabeposition oder Freigabeanordnung von Spannanker 7 und Spannstrang 2 zueinander. Der Spannstrang 2 verläuft durch den ersten Abschnitt 26 der Eintrittsöffnung 13 In dieser Darstellung kann der Spannstrang 2 in Längsrichtung L frei gegenüber dem Spannanker 7 bewegt und der Spannanker 7 auch vollständig vom Spannstrang 2 gelöst werden.

Die **Fig. 6b** zeigt einen Spannzustand der Spanneinheit 1. Dazu wurde zunächst eine entsprechende Vorspannung aufgebracht, beispielsweise durch Zugkräfte auf den Spannstrang 2 und/oder Druckkräfte auf den Spannanker 7 in Längsrichtung L. In dem vorgespannten Zustand wurde dann eine Schubkraft F auf den Spannanker 7 und/oder den Spannstrang 2 aufgebracht, sodass der Spannstrang 2, insbesondere im Bereich eines Arretierbereichs 5 die Engstelle 28 des Spannankers 7 passiert und der zweite Abschnitt 27 der Eintrittsöffnung 13 den Arretierbereich 5, insbesondere eine Arretierungsstufe 61, 62, 63 in Umfangsrichtung fast vollständig und in Längsrichtung möglichst weitestgehend formschlüssig umschließt.

Diese Überführung wird durch eine zeitweise und elastische Verformung der Materialstege 30 erreicht oder ermöglicht. In der Darstellung der Fig. 6b ist zu erkennen, dass die Materialstege 30 nach dem Passieren des Spannstrangs 2 vollständig oder zumindest fast vollständig in die Ausgangssituation zurückkehren. Dadurch wird durch die Engstelle 28 eine Rückkehr des Spannstrangs 2 in den ersten Abschnitt 26 der Eintrittsöffnung 13 effektiv verhindert, wenngleich dies, beispielsweise durch eine entsprechend umgekehrt wirkende Krafteinwirkung F auf den Vorsprung 31 möglich bleibt.

In der dargestellten Spannposition oder Arretierposition der Fig. 6b kann, falls gewünscht, das überstehende Ende des Spannstrangs 7 abgelängt, insbesondere abgeschnitten oder abgekniffen, werden.

### Bezugszeichenliste

- 1: Spanneinheit
- 1a: erste Spanneinheit
- 1b: zweite Spanneinheit
- 2: Spannstrang
- 2a: Spannstrang der ersten Spanneinheit
- 2b: Spannstrang der zweiten Spanneinheit
- 3: erster Spannanker
- 3a: erster Spannanker der ersten Spanneinheit
- 3b: erster Spannanker der zweiten Spanneinheit
- 4: freies Ende
- 5: Arretierbereich
- 6: Krafteintragsfläche
- 6a: Krafteintragsfläche der ersten Spanneinheit
- 7: zweiter Spannanker
- 7a: zweiter Spannanker der ersten Spanneinheit
- 7b: zweiter Spannanker der zweiten Spanneinheit
- 8: weitere Krafteintragsfläche
- 8a: weitere Krafteintragsfläche der ersten Spanneinheit
- 9: Arretiermittel
- 10: äußerer Abschnitt
- 11: Außenkontur
- 12: innerer Abschnitt
- 13: Eintrittsöffnung
- 14: Randabschnitt
- 15: schlitzförmige Materialaussparung
- 16: Senke
- 17: ringförmige Stirnfläche
- 18: Kegelstupfabschnitt
- 19: Versteifungselement
- 20: Verbindungsabschnitt
- 21: Spitze
- 22: Griffabschnitt
- 23: Gleitfläche
- 24: Endfläche
- 25: Endstück des Spannstrangs
- 26: erster Abschnitt
- 27: zweiter Abschnitt
- 28: Engstelle
- 29: Materialausnehmungen
- 30: Materialstege
- 31: Vorsprung
- 32: Mittelpunkt
- 33: Mittelpunkt

- 51: erster Arretierbereich
- 51a: erster Arretierbereich der ersten Spanneinheit
- 51b: erster Arretierbereich der zweiten Spanneinheit
- 52: zweiter Arretierbereich
- 52b: zweiter Arretierbereich der zweiten Spanneinheit
- 53: dritter Arretierbereich

- 61: erste Arretierstufe
- 62: zweite Arretierstufe
- 63: dritte Arretierstufe

- 71-74: erste bis vierte Rastnase

- 100: Vorratseinheit
- 101: erste Seitenwand
- 102: zweite Seitenwand
- 103: dritte Seitenwand
- 104: vierte Seitenwand

- F: Schubkraft
- L: Längsrichtung

- Q1: größerer Querschnitt
- Q2: kleinerer Querschnitt

- AA: Schnittebene
- BB: Schnittebene

## Patentansprüche

1. Spanneinheit (1) zum Verspannen von gegenüberliegenden Seitenwänden (101-104) einer Vorratseinheit (100), insbesondere eines Kartons, in einem Spannzustand, umfassend
einen Spannstrang (2), der einen ersten Spannanker (3) umfasst, sich von dem ersten Spannanker (3) entlang einer Längsrichtung (L) zu einem freien Ende (4) hin erstreckt und zwischen dem ersten Spannanker (3) und dem freien Ende (4) wenigstens einen Arretierbereich (5) mit einer Vielzahl von in Längsrichtung zueinander benachbart angeordneten Arretierstufen (61, 62, 63) umfasst, wobei der erste Spannanker (3) im Spannzustand zum außenseitigen Abstützen einer der Seitenwände (101, 103) eine erste Krafteintragsfläche (6) ausbildet
und einen mit dem Spannstrang (2) verbindbaren zweiten Spannanker (7) zum Abstützen der gegenüberliegenden Seitenwand (102, 104) durch das Ausbilden einer weiteren Krafteintragsfläche (8), wobei der zweite Spannanker (7) Arretiermittel (9) umfasst, die zum Zusammenwirken mit dem Arretierbereich (5) so ausgebildet sind, dass der zweite Spannanker (7) zum Verspannen der Seitenwände in einer der Arretierstufen (61-63) festlegbar ist, wobei der zweite Spannanker (7) einen äußeren Abschnitt (10) mit einer in Umfangsrichtung vollständig geschlossene Außenkontur (11) und einen inneren Abschnitt (12) mit einer Eintrittsöffnung (13) zum Einführen des freien Endes (4) und zum Führen und/oder Positionieren des Arretierbereichs (5) im Spannzustand umfasst
**dadurch gekennzeichnet,**
**dass** die Eintrittsöffnung (13) zum Einführen des freien Endes (4) und zum Führen und/oder Positionieren des Arretierbereichs (5) im Spannzustand zwei Abschnitte (26, 27) aufweist, wobei ein erster Abschnitt (26) mit einem größeren Querschnitt (Q1) das Einführen des freien Endes (4) ermöglicht und ein zweiter Abschnitt (27) mit einem kleineren Querschnitt (Q2) ein Positionieren des Arretierbereichs (5) im Spannzustand ermöglicht.

2. Spanneinheit nach Anspruch 1,
**dadurch gekennzeichnet,**
**dass** der erste und der zweite Abschnitt (26, 27) über eine Engstelle (28) miteinander verbunden sind.

3. Spanneinheit nach einem der Ansprüche 1 oder 2,
**dadurch gekennzeichnet,**
**dass** der zweite Abschnitt (27) in Längsrichtung (L) einen sich aufweitenden Querschnitt (Q2), bevorzugt in der Form eines Kegelstumpfes aufweist, insbesondere mit einem Aufweitungswinkel, der im Wesentlichen einem Winkel zwischen benachbarten Arretierungsstufen (61, 62, 63) des Arretierbereichs (5) entspricht..

4. Spanneinheit nach einem der Ansprüche 1 bis 3,
**dadurch gekennzeichnet,**
**dass** die Engstelle (28) einseitig oder beidseitig elastisch verformbar ausgebildet ist.

5. Spanneinheit nach Anspruch 4,
**dadurch gekennzeichnet,**
**dass** die Verformbarkeit der Engstelle (28) durch Materialausnehmungen (29) in radial außenseitig zu der Engstelle (28) befindlichen Bereichen des inneren Abschnitts (12) bewirkt wird.

6. Spanneinheit nach Anspruch 5,
**dadurch gekennzeichnet,**
**dass** die Materialausnehmungen (29) so angeordnet sind, dass die Engstelle (28) durch als Federn wirkende Materialstege (30) begrenzt wird.

7. Spanneinheit nach einem der Ansprüche 1 bis 6,
**dadurch gekennzeichnet,**
**dass** der äußere Abschnitt (10), bevorzugt an einem äußeren Rand, einen Vorsprung (31) aufweist, der im Wesentlichen in der Verlängerung eines Mittelpunktes (32) des ersten Abschnitts (26) und eines Mittelpunktes (33) des zweiten Abschnitts (27) angeordnet ist.

8. Spanneinheit nach einem der Ansprüche 1 bis 7,
**dadurch gekennzeichnet,**
**dass** der Spannstrang (2) die Arretierstufen (61-63) an wenigstens zwei längsschnittlich gegenüberliegenden Außenseiten des Spannstrangs (2) umfasst und/oder ausbildet.

9. Spanneinheit nach einem der Ansprüche 1 bis 8,
**dadurch gekennzeichnet,**
**dass** der Spannstrang (2) eine runde oder ovale Querschnittsfläche aufweist.

10. Spanneinheit nach einem der Ansprüche 1 bis 9,
**dadurch gekennzeichnet,**
**dass** der Spannstrang (2) zum Ausbilden der Arretierstufen (61-63) eine Abfolge von jeweils eine ringförmige Stirnseite (17) umfassenden Kegelstupfabschnitten (18) umfasst, die so ausgebildet sind, dass die Arretiermittel (9), insbesondere der Randabschnitt (14) oder die Rastnasen (71-74), in Eingriff mit einer der ringförmigen Stirnseiten (17) eines der Kegelstupfabschnitte (18) bringbar ist.

11. Spanneinheit nach einem der Ansprüche 1 bis 10,
**dadurch gekennzeichnet,**
**dass** der erste Spannanker (3) und/oder der zweite Spannanker (7) tellerförmig ausgebildet ist und/oder wenigstens ein in Radialrichtung (R) ausgebildetes, insbesondere steg- und/oder stabförmiges, Versteifungselement (19) umfasst.

12. Spanneinheit nach einem der Ansprüche 1 bis 11,
**dadurch gekennzeichnet,**
**dass** der erste Spannanker (3) und der Spannstrang (2) zueinander monolithisch und/oder einstückig und/oder integral ausgebildet sind und insbesondere mittels Spritzguss-Technik aus einem Guss, insbesondere einem Spritzguss, herstellbar oder hergestellt sind.

13. Spanneinheit nach einem der Ansprüche 1 bis 12,
**dadurch gekennzeichnet,**
**dass** der Spannstrang (2) wenigstens zwei Arretierbereiche (51, 52) umfasst, wobei zwischen den wenigstens zwei Arretierbereichen (51, 52) wenigstens ein Verbindungsabschnitt (20) angeordnet ist.

14. Spanneinheit nach einem der Ansprüche 1 bis 13,
**dadurch gekennzeichnet,**
**dass** der Spannstrang (2) in Längsrichtung (L) so ausgebildet ist, dass der erste Arretierbereich (51) zum Zusammenwirken mit gegenüberliegend beabstandeten Seitenwänden (101-104) einer Vorratseinheit (100) im Bereich von im Wesentlichen 600mm, insbesondere zwischen 540mm bis 630mm, ausgebildet ist und dass der wenigstens zweite Arretierbereich (52) zum Zusammenwirken mit gegenüberliegend beabstandeten Seitenwänden (101-104) einer Vorratseinheit (100) im Bereich von im Wesentlichen 800mm, insbesondere zwischen 740mm bis 830mm, ausgebildet ist.

15. Spanneinheit nach einem der Ansprüche 1 bis 14,
**dadurch gekennzeichnet,**
**dass** der Spannstrang (2) einen dritten Arretierbereich (53) umfasst, wobei der dritte Arretierbereich (53) zum Zusammenwirken mit gegenüberliegend beabstandeten Seitenwänden (101-104) einer Vorratseinheit (100) im Bereich von im Wesentlichen 1200mm, insbesondere zwischen 1140mm bis 1230mm, ausgebildet ist.

16. Vorratseinheit (100), insbesondere Karton, mit gegenüberliegenden Seitenwänden (101-104), insbesondere Kartonwänden, die einen Aufnahmeraum für Schüttgut, insbesondere Kunststoffgranulat, mantelseitig begrenzen und wenigstens eine Spanneinheit (1) zum Verspannen von zwei gegenüberliegenden Seitenwänden (101-104) entgegen einer Gewichtskraft des aufnehmbaren Schüttguts umfasst, **dadurch gekennzeichnet,**
**dass** die Spanneinheit (1) nach einem der vorgenannten Ansprüche ausgebildet ist.

## Claims

1. A fortifying unit (1) for fortifying opposite lateral walls (101-104) of a storage unit (100), in particular of a cardboard box, in a fortified state, the fortifying unit comprising
a fortifying shank (2), which comprises a first fortifying anchor (3), extends from the first fortifying anchor (3) along a length (L) to a free end (4) and comprises at least one stop area (5) between the first fortifying anchor (3) and the free end (4), the stop area (5) having a plurality of stop steps (61, 62, 63) disposed adjacent to each other along the length, the first fortifying anchor (3) forming a first force-application surface (6) in the fortified state for supporting one of the lateral walls (101, 103) from the outside,
and a second fortifying anchor (7) connectable to the fortifying shank (2) and configured to support the opposite lateral wall (102, 104) by forming another force-application surface (8), the second fortifying anchor (7) comprising stop means (9), which are formed in such a manner for interacting with the stop area (5) that the second fortifying anchor (7) is set in one of the fortifying steps (61-63) for fortifying the lateral walls, the second fortifying anchor (7) comprising an outer section (10) having an outer contour (11) fully closed in the circumferential direction and an inner section (12) having an entry opening (13) for inserting the free end (4) and for guiding and/or positioning the stop area (5) in the fortified state,
**characterized in that**
the entry opening (13) for inserting the free end (4) and for guiding and/or positioning the stop area (5) has two sections (26, 27) in the fortified state, a first section (26) with a larger cross section (Q1) enabling the insertion of the free end (4) and a second section (27) with a smaller cross section (Q2) allowing a positioning of the stop area (5) in the fortified state.

2. The fortifying unit according to claim 1,
**characterized in that**
the first and the second section (26, 27) are connected to each other via a constriction (28).

3. The fortifying unit according to claim 1 or 2,
**characterized in that**
the second section (27) has a widening cross section (Q2), preferably in the form of a frustum, along the length (L), in particular at a widening angle which essentially corresponds to an angle between the adjacent stop steps (61, 62, 63) of the stop area (5).

4. The fortifying unit according to any one of the claims 1 to 3,
**characterized in that**
the constriction (28) is elastically deformable on one or both ends.

5. The fortifying unit according to claim 4,
**characterized in that**
the constriction (28) is deformed by material removals (29) in areas of the inner section (12) located on the radially outer side of the constriction (28).

6. The fortifying unit according to claim 5,
**characterized in that**
the material removals (29) are disposed in such a manner that the constriction (28) is limited by material webs (30) acting as springs.

7. The fortifying unit according to any one of the claims 1 to 6,
**characterized in that**
the outer section (10) has a projection (31), preferably at an outer edge, the projection (31) being disposed substantially in the extension of a center (32) of the first section (26) and a center of the second section (27).

8. The fortifying unit according to any one of the claims 1 to 7,
**characterized in that**
the fortifying shank (2) comprises and/or forms the stop steps (61-63) at at least two outer sides of the fortifying shank (2) opposite each other along the length.

9. The fortifying unit according to any one of the claims 1 to 8,
**characterized in that**
the fortifying shank (2) has a round or oval cross-sectional surface.

10. The fortifying unit according to any one of the claims 1 to 9,
**characterized in that**
the fortifying shank (2) comprises a sequence of frustum sections (18) for forming the stop steps (61, 63), each frustum section (18) comprising an annular front face (17) and being designed such that the stop means (9), in particular the edge section (14) or the locking noses (71-74), are engaged with one of the annular front faces (17) of one of the frustum sections (18).

11. The fortifying unit according to any one of the claims 1 to 10,
**characterized in that**
the first fortifying anchor (3) and/or the second fortifying anchor (7) is plate-shaped and/or comprises at least one in particular web- and/or rod-shaped stiffening element (19) formed in the radial direction.

12. The fortifying unit according to any one of the claims 1 to 11,
**characterized in that**
the first fortifying anchor (3) and the fortifying shank (2) are formed monolithically and/or in one piece and/or integrally and are producible or produced in particular from a mold, in particular an injection mold, by means of an injection-molding technique.

13. The fortifying unit according to any one of the claims 1 to 12,
**characterized in that**
the fortifying shank (2) comprises at least two stop areas (51, 52), at least one connective section (20) being disposed between the at least two stop areas (51, 52).

14. The fortifying unit according to any one of the claims 1 to 13,
**characterized in that**
the fortifying shank (2) is designed such along the length (L) that the first stop area (51) is formed in the range of essentially 600 mm, in particular between 540 mm and 630 mm, for interacting with oppositely spaced lateral walls (101-104) of a storage unit (100) and **in that** the at least second stop area (52) is formed in the range of essentially 800 mm, in particular between 740mm and 830 mm, for interacting with oppositely spaced lateral walls (101-104) of a storage unit (100).

15. The fortifying unit according to any one of the claims 1 to 14,
**characterized in that**
the fortifying shank (2) comprises a third stop area (53), the third stop area (53) is formed in the range of 1200 mm, in particular between 1140 mm and 1230 mm, for interacting with oppositely spaced lateral walls (101-104) of a storage unit (100).

16. A storage unit (100), in particular a cardboard box, having opposite lateral walls (101-104), in particular cardboard walls, which limit the holding space for bulk solids, in particular plastic granules, from the outside and comprise at least one fortifying unit (1) for fortifying two opposite lateral walls (101-104) against the weight of the bulk solid to be held,
**characterized in that**
the fortifying unit (1) is designed according to any one of the preceding claims.

## Revendications

1. Unité de renforcement (1) pour fortifier les parois latérales (101-104) opposées d'une unité de stockage (100), en particulier d'une boîte en carton, dans un état renforcé, l'unité de renforcement comprenant
une tige de renforcement (2), qui comprend un premier ancre de renforcement (3), s'étend à partir du premier ancre de renforcement (3) sur une longueur (L) jusqu'à une extrémité libre (4) et comprend au moins une partie d'arrêt (5) entre le premier ancre de renforcement (3) et l'extrémité libre (4), la partie d'arrêt (5) ayant une pluralité de marches d'arrêt (61, 62, 63) disposées adjacentes les unes aux autres sur la longueur, le premier ancre de renforcement (3) formant une première surface (6) à application de force dans l'état renforcé pour soutenir l'une des parois latérales (101, 103) de l'extérieur,
et un deuxième ancre de renforcement (7) connectable à la tige de renforcement (2) et configuré pour soutenir la paroi latérale (102, 104) opposée en formant une autre surface (8) à application de force, le deuxième ancre de renforcement (7) comprenant des moyens d'arrêt (9), qui sont formés de manière à interagir avec la partie d'arrêt (5) de sorte que le deuxième ancre de renforcement (7) est ajusté dans l'une des marches d'arrêt (61-63) pour fortifier les parois latérales, le deuxième ancre de renforcement (7) comprenant une partie extérieure (10) ayant un contour extérieur (11) entièrement fermé dans la direction circonférentielle et une partie intérieure (12) ayant une ouverture d'entrée (13) pour insérer l'extrémité libre (4) et pour guider et/ou positionner la partie d'arrêt (5) dans l'état renforcé,
**caractérisée en ce que**
l'ouverture d'entrée (13) pour insérer l'extrémité libre (4) et pour guider et/ou positionner la partie d'arrêt (5) a deux parties (26, 27) dans l'état renforcé, une première partie (26) avec une section transversale plus grande (Q1) permettant l'insertion de l'extrémité libre (4) et une deuxième partie (27) avec une section transversale plus petite (Q2) permettant un positionnement de la partie d'arrêt (5) dans l'état renforcé.

2. Unité de renforcement selon la revendication 1,
**caractérisée en ce que**
la première et la deuxième partie (26, 27) sont reliées l'une à l'autre par une constriction (28).

3. Unité de renforcement selon la revendication 1 ou la revendication 2, **caractérisée en ce que**
la deuxième partie (27) a une section transversale (Q2) s'élargissant, de préférence en forme de tronc de cône, sur la longueur (L), en particulier à un angle d'élargissement qui correspond essentiellement à un angle entre les marches d'arrêt (61, 62, 63) adjacentes de la partie d'arrêt (5).

4. Unité de renforcement selon l'une quelconque des revendications 1 à 3,
**caractérisée en ce que**
la constriction (28) est élastiquement déformable à l'une ou aux deux extrémités.

5. Unité de renforcement selon la revendication 4,
**caractérisée en ce que**
la constriction (28) est déformée par des enlèvements de matière (29) dans des zones de la partie intérieure (12) situées sur le côté radialement extérieur de la constriction (28).

6. Unité de renforcement selon la revendication 5,
**caractérisée en ce que**
les enlèvements de matière (29) sont disposés de telle sorte que la constriction (28) est limité par des bandes de matière (30) agissant comme des ressorts.

7. Unité de renforcement selon l'une quelconque des revendications 1 à 6,
**caractérisée en ce que**
la partie extérieure (10) a une saillie (31), de préférence sur un bord extérieur, la saillie (31) étant disposée en gros dans le prolongement d'un centre (32) de la première partie (26) et d'un centre de la deuxième partie (27).

8. Unité de renforcement selon l'une quelconque des revendications 1 à 7,
**caractérisée en ce que**
la tige de renforcement (2) comprend et/ou forme les marches d'arrêt (61-63) sur au moins deux côtés extérieurs de la tige de renforcement (2) opposés l'un à l'autre sur la longueur.

9. Unité de renforcement selon l'une quelconque des revendications 1 à 8,
**caractérisée en ce que**
la tige de renforcement (2) a une surface de section transversale ronde ou ovale.

10. Unité de renforcement selon l'une quelconque des revendications 1 à 9,
**caractérisée en ce que**
la tige de renforcement (2) comprend une séquence de parties de (18) de tronc de cône pour former les marches d'arrêt (61-63), chaque partie (18) de tronc de cône comprenant une face frontale annulaire (17) et étant conçue de telle sorte que les moyens d'arrêt (9), en particulier la partie de bord (14) ou les nez de verrouillage (71-74), sont engagés avec l'une des faces frontales annulaires (17) de l'une des parties (18) de tronc de cône.

11. Unité de renforcement selon l'une quelconque des revendications 1 à 10,
**caractérisée en ce que**
le premier ancre de renforcement (3) et/ou le deuxième ancre de renforcement (7) a la forme d'une plaque et/ou comprend au moins un élément de renforcement (19) en particulier en forme de bande et/ou de tige et formé dans la direction radiale (R).

12. Unité de renforcement selon l'une quelconque des revendications 1 à 11,
**caractérisée en ce que**
le premier ancre de renforcement (3) et la tige de renforcement (2) sont formés de manière monolithique et/ou en une seule pièce et/ou solidaires entre l'un à l'autre et peuvent être produits ou fabriqués notamment à partir d'un moule, en particulier d'un moule à injection, au moyen d'une technique de moulage par injection.

13. Unité de renforcement selon l'une quelconque des revendications 1 à 12,
**caractérisée en ce que**
la tige de renforcement (2) comprend au moins deux parties d'arrêt (51, 52), au moins une partie de connexion (20) étant disposée entre les au moins deux parties d'arrêt (51, 52).

14. Unité de renforcement selon l'une quelconque des revendications 1 à 13,
**caractérisée en ce que**
la tige de renforcement (2) est conçue sur la longueur (L) de telle sorte que la première partie d'arrêt (51) conçue à interagir avec les parois latérales (101-104) espacées de manière opposée d'une unité de stockage (100) est formée dans une plage d'environ 600 mm, en particulier entre 540 mm à 630 mm, et que l'au moins deuxième partie d'arrêt (52) conçue à interagir avec des parois latérales (101-104) espacées de manière opposé d'une unité de stockage (100) est formée dans une plage d'environ 800 mm, en particulier entre 740 mm et 830 mm.

15. Unité de renforcement selon l'une quelconque des revendications 1 à 14,
**caractérisée en ce que**
la tige de renforcement (2) comprend une troisième partie d'arrêt (53), la troisième partie d'arrêt (53) conçue à interagir avec des parois latérales (101-104) espacées de manière opposée d'une unité de stockage (100) est formée dans la plage de 1200 mm essentiellement, en particulier entre 1140 mm à 1230 mm.

16. Unité de stockage (100), en particulier une boîte en carton, ayant des parois latérales (101-104) opposées, en particulier des parois en carton, qui limitent l'espace de rétention des solides en vrac, en particulier des granulés de plastique, depuis l'extérieur et comprend au moins une unité de renforcement (1) pour fortifier deux parois latérales (101-104) opposées contre le poids du solide en vrac retenu, **caractérisée en ce que**
l'unité de renforcement (1) est conçue selon l'une quelconque des revendications précédentes.
